# EUROPEAN PATENT SPECIFICATION

(11) **EP 0 585 332 B1**
(45) Date of publication and mention of the grant of the patent: **27.12.1995**
(21) Application number: 92911524.4
(22) Date of filing: 14.05.1992
(51) Int. Cl.: G06T 11/60

(54) **METHOD AND APPARATUS FOR AUTOMATED PAGE LAYOUT OF TEXT AND GRAPHIC ELEMENTS**
VORRICHTUNG UND VERFAHREN ZUM AUTOMATISIERTEN SEITENLAYOUT VON TEXT UNDGRAPHISCHEN ELEMENTEN
PROCEDE ET APPAREIL POUR MISE EN PAGE AUTOMATIQUE D'ELEMENTS DE TEXTE ET GRAPHIQUES

(30) Priority: 17.05.1991 US 702052
(43) Date of publication of application: 09.03.1994
(73) Proprietor: SIEBER, Joseph S., Weston, MA 02193 (US); SIEBER, Jonathan D., Wayland, MA 01778 (US)
(72) Inventor: SIEBER, Jonathan, D., Wayland, MA 01778 (US)
(74) Representative: Schoppe, Fritz, Dipl.-Ing.
(86) International application number: US9204076
(87) International publication number: WO9221097

(56) References cited:
- COMPUTERS AND GRAPHICS. vol. 11, no. 4, 1987, OXFORD GB pages 377 - 387; GRUBER W.: 'STRUCTURES OF AN INTEGRATED DOCUMENT WORKSTATION'
- IBM TECHNICAL DISCLOSURE BULLETIN. vol. 30, no. 2, July 1987, NEW YORK US pages 903 - 909; -: 'VARIABLE OBJECT SPACE IN MIXED OBJECT DOCUMENT CONTENT ARCHITECTURE'

## Description

### FIELD OF THE INVENTION

This invention relates to electronic publishing, and more particularly, to a system for automatically generating the page layout of a printed document from user-defined text and graphic elements.

### BACKGROUND OF THE INVENTION

The design of printed material, i.e., the page layout, has historically been closely tied to the available page production technology. As publishing technology has evolved from early metal type technology to digitally scaled type technology, electronic publishing tools have likewise evolved. Early electronic publishing tools, such as TROFF by Bell Laboratories, Murray Hill, NJ, were designed to accommodate a page model of metal type which was laid out, from beginning to end, in a single process. These early publishing tools, required the user to embed descriptions of the page layout in the document itself. The embedded descriptions were later interpreted by a formatting program in a batch-oriented manner. That is, the layout process occurred without human interaction.

More recent interactive programs such as INTERLEAF by Interleaf Publishing, Inc., Waltham, MA, U.S.A. allow the user to see the page layout in real time as it is being editted. Such programs are particularly suited for arranging the page layout of running text, and include facilities for breaking up lines, columns and pages of text. The parameters available to the user to design the page layout typically control word hyphenation, line length, formatting of page headers, footers and margins, formatting of text into columns, and flow of text around graphics. Further, once a page layout is defined by the user, these programs allow a multipage document to be created with a consistent look throughout all pages. Although such publishing tools are appropriate for formatting running text, they are less well-suited for applications in which a number of graphical and text elements must relate to each other in complex ways. For this reason, page layout for ads and many other graphically oriented documents were still done by a graphic designer using hand paste-ups.

Still more recently, graphics-oriented publishing tools such as PAGE MAKER by Aldus, Corp. Seattle, WA, and COREL DRAW by Corel System, Corp., Ottawa, Canada have combined interactive text formatting with graphics editing commands to give the user the ability to interactively place individual text or graphical objects anywhere on a page to effect an electronic paste-up of a page. With these newer tools, the designer is given much creative freedom, and interactively makes numerous changes to the page layout, typically on a trial and error basis, until the desired page layout is achieved. These tools are most suited for one-of-a-kind page layouts in which the choice of type and positioning of graphics and lettering is critical.

A workstation for layout of text elements and graphic elements on a page may be seen in the article Structures of an Integrated Documnet Workstation by W. Gruber, published in Computers & Graphics, Vol. 11, No. 4, 1987. The workstation is part of a document processing system, including a main processor, central documents store, and typesetting facilities.

To layout the text and grapic elements on the page, this system conducts the following steps:
- prompting the operator to input a desired page layout manually and to define the text and graphic elements;
- arranging the text and graphic elements according to the defined layout by:
   -- determining any layout conflicts; and
   -- if there are any layout conflicts, prompting the operator to redefine the layout; and
- displaying the page layout.

Thus, this system is not able to complete the layout of a document if all of the constraints cannot be simultaneously satisfied without requiring support by the operator.

Object of the present invention is to provide a system which stores a plurality of page specifications, each page specification comprising a plurality of constraints describing the layout of user-definable text and graphic elements.

A further object of the present invention is to provide a system which allows the user to select a page specification, define text and graphic elements, and then automatically generate a page layout in accordance with the page specification through selective manipulation of the text and graphic elements.

Another object of the present invention is to provide a system which automates the page layout process, frees the designer from executing numerous revisions of the page layout to reach the desired format.

Yet another object of the present invention is to provide a method by which text and graphic elements in a page layout are automatically arranged in accordance with a plurality of constraints of a selected page specification.

A further object of the present invention is to provide a method for automating the layout of text and graphic elements on a page which frees the designer from executing numerous revisions of the page layout until the desired format is achieved.

### SUMMARY OF THE INVENTION

The above and other objects are achieved in accordance with the present invention, as claimed, which, according to a first aspect, provides an apparatus for automatically generating a layout of a plurality of text elements and graphic elements on a page. The apparatus comprises means for storing a plurality of page specifications, each page specification comprising a plurality of constraints describing the layout of user-definable text elements and graphic elements on a paper. Means are provided for selecting one of the page specifications as well as for receiving and storing user-defined character strings and graphic data defining the text elements and graphic elements, respectively, of the selected page specification. The apparatus further comprises means for manipulating the text and graphic elements of the selected page specification to automatically generate a page layout in accordance with the constraints of the selected page specification. Finally, the apparatus includes means for displaying the generated page layout.

In accordance with a second aspect of the present invention, a method is provided for automated layout of text and graphic elements on a page. Such method comprises the steps of establishing a plurality of page specifications, each containing a plurality of constraints describing the layout of user definable text and graphic elements, selecting one of the page specifications, defining the text and graphics elements, arranging the text and graphic elements into a page layout automatically in accordance with the constraints of the selected page specification, and displaying the arranged page layout.

The foregoing and other features, objects and advantages of the invention will be more fully understood by reading the detailed description below in conjunction with the drawings.

### BRIEF DESCRIPTION OF THE DRAWINGS

In the drawings:
FIG. 1 is a block diagram of an apparatus for automatically generating a page layout according to the present invention;
FIG. 2 is a conceptual illustration of a generic document in accordance with the present invention;
FIG. 3 is a conceptual illustration of the page specification of the document of FIG. 2 in accordance with the present invention; and
FIG. 4 is a flow chart illustrating the steps of a method for automated layout of a page according to the present invention.

### DETAILED DESCRIPTION

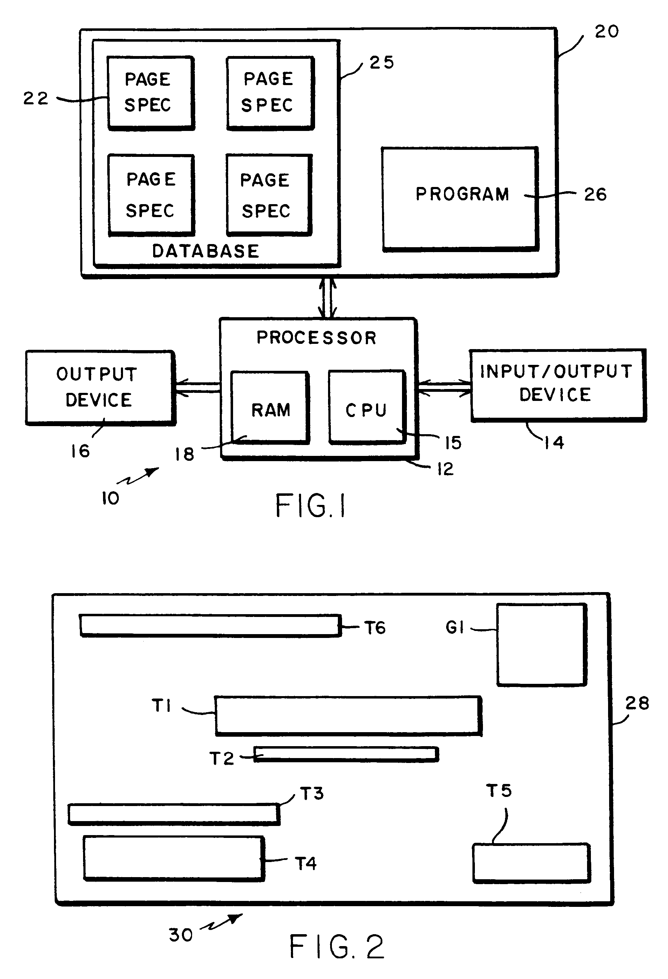

With reference now to the drawings, and more particularly to FIG. 1 thereof, a system 10 in accordance with the present invention is shown. System 10 is a computer-based system which comprises a digital processor 12 coupled to an input/output device 14, an optional printer 16, and a memory device 20. Digital processor 12 has a central processing unit 15 and a quantity of RAM memory 18 sufficient to execute the operations of the present invention, as explained hereinafter. Any number of commercially available computers are suitable for use as digital processor 12, ranging from microprocessor-based personal computers, to work stations, minicomputers and even main frame computers.

Input/output device 14 is typically a conventional computer terminal having a CRT display and an alphanumeric keyboard, for both sending and receiving data to and from digital processor 12. Output device 16 typically comprises a printer for displaying the results of the generated page layouts according to the present invention. Output device 16 is optional if device 14 is capable of visually displaying the generated page layout, as with most conventional computer terminals.

Digital processor 12 is coupled to a memory 20 through conventional input/output controllers and/or bus structures, depending on the implementation of memory 20. If digital processor 12 includes an adequate amount of on board RAM memory, memory 20 may comprise a ROM memory implemented with an optical disk or ROM cartridge. Alternately, memory 20 may comprise a RAM memory and may be implemented with a magnetic disk, magnetic tape, or a semiconductor memory. It will be obvious to those reasonably skilled in the art that memory 20 may be implemented with a hard disk drive located directly in digital processor 12. It will be further obvious to those reasonably skilled in the art that system 10 may comprise a microprocessor based personal computer which has a keyboard and CRT terminal coupled thereto and contains adequate memory capacity to store the database and program of the present invention, as explained hereinafter.

As indicated in FIG. 1, memory 20 stores a program 26 of proprietary source code, and a database 25 of one or more page specifications. Each page specification generically describes the page layout of a document, such as a business card, wedding invitation or business letterhead.

Each page specification comprises page descriptors, undefined graphic and text elements, and a plurality of constraints relating to the graphic and text elements, and their relationships to one another and the page description.

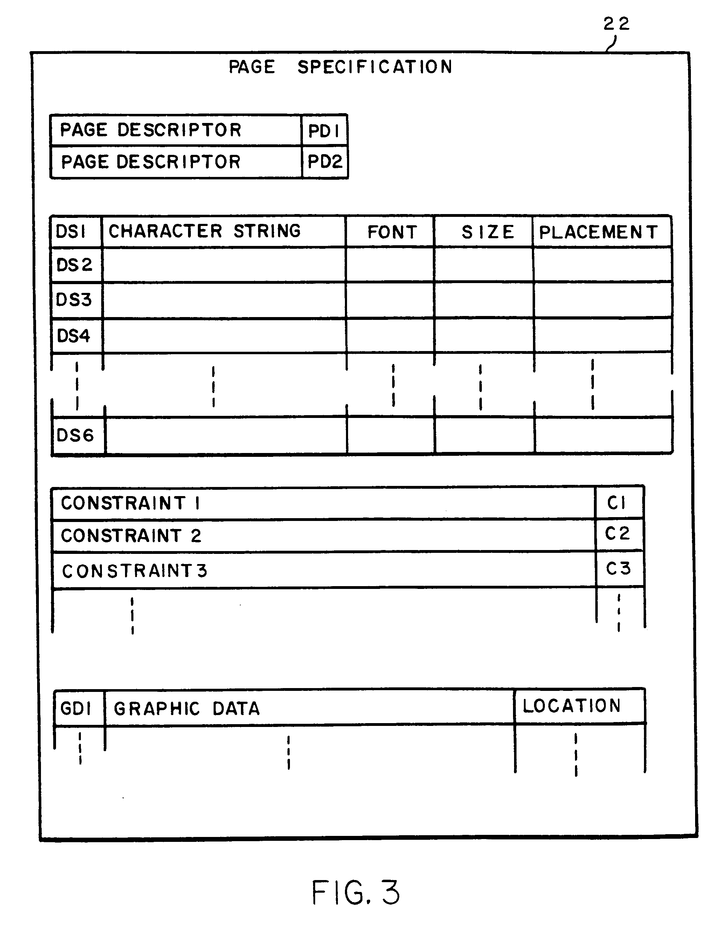

For example, page specification 22, shown conceptually in FIGS. 1 and 3, describes a generic document 30, shown conceptually in FIG. 2, which for the purposes of illustration is a business card. Document 30 comprises a page 28 having a default shape of unspecified dimensions. In the illustrative embodiment, page 28 has a landscape format, i.e. the width of the page is greater than the height of the page. Document 30 further includes an undefined graphics element G1 as well as undefined text elements T1-T6.

Referring to FIG. 3, page specification 22, comprises a plurality of data structures representing the text and graphics elements of document 30, as well as a plurality of constraints which dictate the relationships of the graphics and text elements to one another as well as to the page description. Text elements T1-T6 of document 30 are represented in page specification 22 by data structure DS1-DS6, respectively, which have the user-definable attributes of font style, character string, size, and location, as indicated. Graphics element G1 is also represented by a data structure GD1 having the user-definable attributes of location, size, and actual graphics data. A plurality of other data structures, page descriptors PD1-PD2, within page specification 22 define unchangeable aspects of the page 28. Page specification 22 further comprises a plurality of constraints C1-CN which describe various aspects of page 28 as well as the size and placement of the text and graphic elements of document 30 and their relationship to each other and to page 28.

To illustrate how page specification 22 describes a generic document, consider again document 30 of FIG. 2, the business card. Page 28 represents the actual medium, typically paper, on which the business card is printed. The default shape of page 28 is dictated by the page descriptors in page specification 22 and may or may not be user-definable. As illustrated, page 28 has a landscape format. In document 30, text element T1 30 generically represents the business card holder's name. The text element T2 generically represents the card holder's title. Text element T3 generically represents the business name, while text element T4 generically represents the business address. Text element T5 generically represents the business telephone number. The text element T6 generically represents optional specialty information such as professional services or products produced by the business. A graphic element G1 generically represents optional graphic information such as a corporate logo or other symbols associated with the card holder's business or trade.

Constraints C1-CN of page specification 22 relate to the actual format of page 28 and the way in which text elements T1-T6 and graphic element G1 relate to one another and to page 28. For example, constraint C1 may require that no text or graphic element be located closer than 1/8 inch to the perimeter of page 28. Constraint C2 may require that text element T1, the cardholder's name, be center within page 28. Constraint C3 may require that text element T2, the cardholder's title, has a type size which is not greater than 1/2 of the type size of the cardholder's name in text element T1. Constraint C4 may require that text element T2, the cardholder's title, be centered beneath text element T1, the cardholder's name. Constraint C5 may require that the type size of text element T3, the business name, be larger than the type size of text element T4, the business address. Constraint C6 may require that text element T5, the business telephone information, be located in the lower left hand corner of page 28. Constraint C7 may require that the first character of text element T6, the specialty information, and the first character of text element T4, the business address be aligned vertically. Constraint C8 may require that graphic element G1, the corporate logo or symbol, if any, be located in the upper right corner of page 28. Numerous other constraints are possible. Still other constraints may define which attributes of the text elements T1-T6 and graphic element G1 are usually definable and what the attribute default values are. Still other constraints may group text or graphic elements into hierarchical structure of derived elements which must be manipulated as single entities.

It will be appreciated by those reasonably skilled in the art that the above-described constraints are for exemplary purposes. The constraints, page descriptors and data structure describing the text elements and graphics elements are not limited to those listed herein and may be structured and defined as desired by the designer of the page specification, typically an experienced graphic designer, to achieve the desired generic document.

Database 25 may contain numerous page specifications, with each specification defining a different generic document. For example, the database may contain several page specifications, each of which generically describes a different business card. By using data structures having default attributes which can be selectively redefined by the user, and a plurality of predefined constraints, a generic page layout is described in each page specification which captures the complex relationships between the graphic and text elements in the page, yet allows the user several degrees of freedom to individually tailor the generic page layout to reflect the desired information.

Referring again to Figure 1, memory 20 contains a proprietary program 26 which, when executed by digital processor 12, enables the user to interact with the database 25 and automatically generates a page layout, given a selected page specification from database 25 and the information supplied by the user. Program 26 contains conventional user interface subroutines which allow the user to select one of the page specifications in database 25 and to interactively enter user information, such as character strings and a graphic data, into RAM memory associated with the data structures of the selected page specification. Once a page specification is selected and all user-definable data is entered, a number of subroutines in a program 26 compare the user-defined data and corresponding data structures of the selected page specification with the constraints of the page specification. If one or more of the constraints cannot be satisfied, as will typically be the case, with the user-defined data as received, a plurality of subroutines are used to selectively modify various attributes of the user-defined text and graphic elements until substantially all of the constraints of the page specification are met.

Program 26 contains subroutines which, for example, change the type size of a character string in a text element, if the default type size and/or user specified type size is inappropriate to satisfy a particular constraint of the page specification. Program 26 may further contains subroutines for stretching the character string of a text element by changing the length of a character string in a single direction thereby maintaining the string aligned with another reference point while increasing its overall length. Such a subroutine may involve an algorithm which changes the spacing between particular characters of a font style or it may distort the character themselves. Program 26 may contain still other subroutines which scale a specific character string of a text element forcing it to either fill or fit within a given area to comply with a constraint of the page specification.

If the placement of a text or graphic element, as defined by the user or by default attributes, does not satisfy one of the constraints of the selected page specification, program 26 may further include subroutines which change the spacing between text and graphic elements by increasing or decreasing the amount of space between the elements themselves as well as the perimeter of the page. Program 26 may contain further subroutines which change the aspect ratio, i.e. the length to width ratio of the page 28, to conform the user-defined information with the various constraints of the page specification.

It will be obvious to those reasonably skilled in the art that program 26 is not limited to the subroutines described herein and may contain other subroutines which change the size, placement and relationship of the text and graphic elements of the selected page specification in relation to one another as well as the page definition.

It may be appreciated that program 26 has the ability to modify the user defined information in the page specification to optimize the number of constraints which are satisfied. In doing so, the program executes numerous theoretical combinations of changes, depending on the number of constraints and elements within the page specification. In this manner, a user selects a generic page specification and indicates the desired character strings. The computer then executes the redundant iterative trial and error revisions of the text and graphics elements to satisfy the page specification and create a document having a page layout which is aesthetically pleasing to the user.

In one embodiment of the present invention, all constraints in a given page specification are of equal importance. In an alternate embodiment, certain constraints are given higher priority than others within the same page specification. In generating the page layout, the higher priority constraints must be satisfied while the lower priority constraints may or may not be. For example, with the business card of generic document 30, a constraint that the cardholder's name be centered within page 28 would be given a higher priority than a constraint requiring the cardholder's name be located a specific distance from any graphic elements on the page. In this alternate embodiment, the page specification may allow considerable degrees of freedom while still achieving satisfaction of the highest priority constraints in the selected page specification.

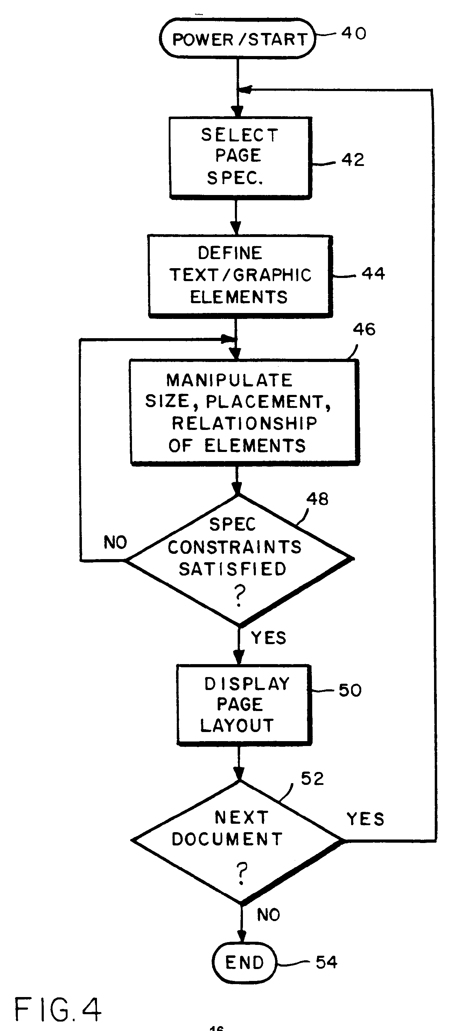

Referring to FIG. 4, a flowchart illustrating the steps of a method for automated layout of a page, according to a second aspect of the present invention, is illustrated. Following power-up and initialization of system 10, as indicated by step 40, the user is prompted and selects one of the page specifications from database 25 in memory 20, as indicated by process step 42. For the purposes of illustration, the selected page specification is assumed to be page specification 22 representing generic document 30, the business card. The program 26 then prompts the user to enter information into RAM memory 18 of processor 12, as indicated in processing step 44.

For example, the user will be prompted to enter the desired dimensions of the page 28, as well as the desired aspect ratio, i.e. portrait or landscape format, if applicable. The user will be further prompted to enter the individual character strings of each of text element T1-T6, as well as the desired font styles, for example Helvetica, Times, Old English, etc., of each text string, if permitted by the constraints of the selected page specification. The user may additionally be able to specify the location and type size of text elements T1-T6. The user may further specify the location of graphics element G1 and provide graphical data which may be either entered directly by the user, with a graphic generating program or which may be previously stored in the system.

Once the user data is entered into the memory, program 26 begins to manipulate the text and graphic elements to satisfy the constraints of the selected page specification, as indicated in process step 46 of FIG. 4. For example, if the user has entered a cardholder name in text element T1 with an abnormally long string of characters, program 26 may reduce the size of the type in order to center the text element within page 28. This, in turn, may require a relocation of text element T2, representing the cardholder's title, in order to satisfy the constraint that the cardholder title be centered beneath the cardholder's name. These changes to text elements T1 and T2 may further require that the spacing or locations of text elements T3, T4, T5 and T6 be changed or relocated with respect to page 28 in order to satisfy other of the constraints within the page specification.

As previously described, the program uses subroutines which scale, stretch and change the size and location of text or graphic data to accommodate the constraints of the specification. After each change to a text or graphic element, the system determines whether all or a majority of the page constraints of the page specification are satisfied, as indicated in decisional step 48. If this condition is not true, further iterations of steps 46 and 48 occur until program 26 determines, in decisional step 48, that all or a substantial majority of constraints are satisfied.

Once program 26 has generated a page 28 which satisfies the constraints of the page specification 22 given the user information, the resulting page layout may be either electronically displayed on input/output device 14 or printed on output device 16, as indicated in process step 50. At this point, the user may choose to create another document using the same method or to end the session, as indicated in decisional step 52. If the user wishes to create another document, the program again queries the user to select a new page specification which is appropriate for the desired document, as indicated in step 42. If the user does not wish to create a new document, the system may be powered down or the session ended, as indicated in step 54.

It will be appreciated from the foregoing, that the method and apparatus of the present invention provides a user with relative degrees of freedom in creating a document while simultaneously freeing the user from making countless revisions to the page layout of a document. Such a system and method are particularly well suited for applications in which generic documents containing individualized information are desired, for example, diplomas, certificates, business cards, wedding invitations, menus, printed advertisements, English language versions of foreign advertisements, etc. As such, the present invention allows a user to select a generically described document and, with numerous degrees of freedom, tailor the generic documents to the desired page layout.

## Claims

1. A method for automated layout of text elements and graphic elements on a page, comprising the following steps:
1.1. selecting one of a plurality of page specifications from a memory device, each page specification comprising a plurality of constraints describing the layout of user-definable text elements and graphic elements on a page;
1.2. defining (44) said text elements and said graphic elements; and
1.3. arranging (46,48) said defined text elements and graphic elements into a page according to said constraints;
characterized in
that said constraints are prioritized and weighted; and
that said defined text elements and graphic elements are arranged into a page layout by automatically performing the following steps:
1.3.1. arranging said text elements and graphic elements on the page in accordance with the prioritization and weighting of said plurality of constraints of said selected one page specification;
1.3.2. checking whether the arranged text elements and graphic elements satisfy the selected page specification; and
1.3.3. if the arranged elements do not satisfy said selected page specification, redefining the layout of the arranged elements,
1.4. if the arranged elements satisfy said selected page specification, displaying the page layout (50).

2. The method according to claim 1 wherein step 1.1 is further characterized by the further steps of:
1.1.1 defining said plurality of constraints; and
1.1.2 storing said plurality of constraints in a memory device.

3. The method according to claim 1 or 2 wherein said plurality of constraints is characterized by:
a constraint on the size of one of the plurality of elements relative to others of said plurality of elements and to the page.

4. The method according to any of claims 1 to 3 wherein said plurality of constraints is characterized by:
a constraint on the placement of one of the plurality of elements relative to others of said plurality of elements and to the page.

5. The method according to any of claims 1 to 4 wherein said plurality of constraints is characterized by:
at least one scaling constraint requiring one of the plurality of elements to fill or fit a designated area of the page.

6. The method according to any of claims 1 to 5 wherein said plurality of constraints is characterized by:
a constraint on the aspect ratio of the page.

7. The method according to any of claims 1 to 6 wherein the step of defining is characterized by the further steps of:
1.2.1 defining the size of the page; and
1.2.2 defining the aspect ratio of the page.

8. The method according to any of claims 1 to 7 wherein the step of defining is further characterized by the step of:
1.2.3 selecting a font style for one of the text elements of the page specification.

9. The method according to any of claims 1 to 8 wherein the step of defining is characterized by:
1.2.4 defining the character strings of the text elements of the page specification.

10. The method according to any of claims 1 to 9 wherein the step of defining is characterized by:
1.2.5 defining the graphic data of the graphic elements of the page specification.

11. The method according to any of claims 1 to 10 wherein step 1.3.3 is characterized by the step of:
scaling the size of one of the text elements and graphic elements in accordance with said plurality of constraints of said selected page specification.

12. The method according to any of claims 1 to 11 wherein step 1.3.3 is characterized by the step of:
changing the spacing between ones of the text elements and graphic elements in accordance with said plurality of constraints of said selected page specification.

13. The method according to any of claims 1 to 12 wherein step 1.3.3 is characterized by the step of:
changing the line breaks in the character strings of one of the text elements defined in the defining step.

14. The method according to any of claims 1 to 13 wherein step 1.3.3 is characterized by the step of:
stretching the character string of at least one text element defined in the defining step by changing the lengths of the character strings in a single direction.

15. The method according to any of claims 1 to 14 wherein the step of displaying is characterized by:
displaying the page layout of step 1.3 electronically on a display device.

16. The method according to any of claims 1 to 15 wherein the step of displaying is characterized by:
printing the page layout of step 1.3 on a printer.

17. The method according to any of claims 1 to 16 wherein step 1.3.3 is characterized by the step of:
manipulating said text elements and graphic elements so that at least one of said plurality of constraints is complied with exactly.

18. The method according to any of claims 1 to 17 wherein said plurality of constraints have a hierarchical arrangement in which some of said constraints have a higher priority than other of said constraints and wherein the higher priority constraints are satisfied in step 1.3.

19. The method according to any of claim 1 to 18 wherein said plurality of constraints is characterized by:
at least one constraint which arranges ones of said text elements and graphic elements into hierarchical structure which is manipulated as a single entity.

20. An apparatus for automatically generating a layout of a plurality of text elements (T1-T6) and graphic elements (G1) on a page including:
memory means (25) for storing a plurality of page specifications, each page specification (22) comprising a plurality of constraints describing the layout of the user-definable text elements and graphic elements on an output medium;
means (12,14,26), coupled to said memory means, for selecting one of said page specifications;
means (12,15,18) for receiving and storing user-defined character strings defining said text elements and user-defined graphic data defining said graphic elements;
means (12,15,26), responsive to said memory means and said receiving means being operable to arrange said text elements and graphic elements into a page layout; and
means (16) for displaying the generated page layout;
characterized in
that said constraints are prioritized and weighted; and
that said arranging means (12,15,26) arrange said text elements and said graphic elements on the page in accordance with the prioritization and weighting of said selected one page specification, check whether the arranged text elements and graphic elements satisfy the selected page specification and redefines the layout of the arranged elements if the arranged elements do not satisfy the page specification; and
that said displaying means (16) display the generated page layout if the arranged elements satisfy said one selected page specification.

21. The apparatus according to claim 20 wherein said means for displaying includes a video display device.

22. The apparatus according to claim 20 or 21 wherein said means for displaying includes a printer.

23. The apparatus according to any of claims 20 to 22 wherein said plurality of constraints is characterized by:
at least one constraint on the size of one of the plurality of elements relative to others of said plurality of elements and to the page.

24. The apparatus according to any of claims 20 to 23 wherein said plurality of constraints is characterized by:
at least one constraint on the placement of one of the plurality of elements relative to other of said plurality of elements and to the page.

25. The apparatus according to any of claims 20 to 24 wherein said plurality of constraints is characterized by:
at least one scaling constraint requiring one of the plurality of elements to fill or fit a designated area of the page.

26. The apparatus according to any of claims 20 to 25 wherein said plurality of constraints is characterized by:
a constraint on the aspect ratio of the page.

27. The apparatus according to any of claims 20 to 26 wherein said means for manipulating is characterized by:
means for scaling the size of one of the text elements in accordance with one of said constraints of said one page specification.

28. The apparatus according to any of claims 20 to 27 wherein said means for manipulating is characterized by:
means for changing the spacing between the text elements and graphic elements in accordance with one of said of constraints of said one page specification.

29. The apparatus according to any of claims 20 to 28 wherein said means for manipulating is characterized by:
means for changing the line breaks in the user-defined character strings of a text element of said one page specification.

30. The apparatus according to any of claims 20 to 29 wherein said means for manipulating is characterized by:
means for stretching a user-defined character string of a text element by changing the length of the character string in a single direction.

31. The apparatus according to any of claims 20 to 30 wherein said means for storing is a ROM memory device.

32. The apparatus according to any of claims 20 to 31 wherein said means for manipulating is characterized by:
means for scaling the size of one of the graphic elements in accordance with one of said constraints of said one page specification.

## Patentansprüche

1. Ein Verfahren zum automatisierten Layout von Text-Elementen und Graphik-Elementen auf einer Seite, das folgende Schritte aufweist:
1.1. Auswählen einer einer Mehrzahl von Seitenspezifikationen aus einer Speichervorrichtung, wobei jede Seitenspezifikation eine Mehrzahl von Beschränkungen aufweist, die das Layout der Benutzer-definierbaren Text-Elemente und Graphik-Elemente auf einer Seite beschreiben;
1.2. Definieren (44) der Text-Elemente und der Graphikelemente; und
1.3. Anordnen (46, 48) der definierten Text-Elemente und Graphik-Elemente in eine Seite gemäß den Beschränkungen;
dadurch gekennzeichnet,
daß die Beschränkungen mit einer Priorität versehen und gewichtet werden; und
daß die definierten Text-Elemente und Graphik-Elemente durch das automatische Durchführen der folgenden Schritte in einem Seitenlayout angeordnet werden:
1.3.1. Anordnen der Text-Elemente und Graphik-Elemente auf der Seite gemäß der Prioritätsversehung und Gewichtung der Mehrzahl von Beschränkungen der ausgewählten Seitenspezifikation;
1.3.2. Überprüfen, ob die angeordneten Text-Elemente und Graphik-Elemente die ausgewählte Seitenspezifikation erfüllen; und
1.3.3. wenn die angeordneten Elemente die ausgewählte Seitenspezifikation nicht erfüllen, Neudefinieren des Layouts der angeordneten Elemente,
1.4. wenn die angeordneten Elemente die ausgewählte Seitenspezifikation erfüllen, Anzeigen des Seitenlayouts (50).

2. Das Verfahren gemäß Anspruch 1, bei dem der Schritt 1.1. ferner durch folgende Schritte gekennzeichnet ist:
1.1.1. Definieren der Mehrzahl von Beschränkungen; und
1.1.2. Speichern der Mehrzahl der Beschränkungen in einer Speichervorrichtung.

3. Das Verfahren gemäß Anspruch 1 oder 2, bei dem die Mehrzahl der Beschränkungen charakterisiert ist durch:
eine Beschränkung auf die Größe eines der Mehrzahl der Elemente relativ zu den anderen der Mehrzahl der Elemente und der Seite.

4. Das Verfahren gemäß einem beliebigen der Ansprüche 1 bis 3, bei dem die Mehrzahl der Beschränkungen charakterisiert ist durch:
eine Beschränkung auf die Plazierung eines der Mehrzahl der Elemente relativ zu den anderen der Mehrzahl der Elemente und der Seite.

5. Das Verfahren gemäß einem beliebigen der Ansprüche 1 bis 4, bei dem die Mehrzahl der Beschränkungen charakterisiert ist durch:
zumindest eine Skalierungsbeschränkung, die fordert, daß eines der Mehrzahl der Elemente einen bezeichneten Bereich der Seite ausfüllt oder in denselben paßt.

6. Das Verfahren gemäß einem beliebigen der Ansprüche 1 bis 5, bei dem die Mehrzahl der Beschränkungen charakterisiert ist durch:
eine Beschränkung auf das Seitenverhältnis der Seite.

7. Das Verfahren gemäß einem beliebigen der Ansprüche 1 bis 6, bei dem der Schritt des Definierens durch folgende weitere Schritte charakterisiert ist:
1.2.1. Definieren der Größe der Seite; und 1.2.2. Definieren des Seitenverhältnisses der Seite.

8. Das Verfahren gemäß einem beliebigen der Ansprüche 1 bis 7, bei dem der Schritt des Definierens ferner durch folgenden Schritt charakterisiert ist:
1.2.3. Auswählen eines Schrifttyps für eines der Text-Elemente der Seitenspezifikation.

9. Das Verfahren gemäß einem beliebigen der Ansprüche 1 bis 8, bei dem der Schritt des Definierens charakterisiert ist durch:
1.2.4. Definieren der Zeichenfolgen der Text-Elemente der Seitenspezifikation.

10. Das Verfahren gemäß einem beliebigen der Ansprüche 1 bis 9, bei dem der Schritt des Definierens charakterisiert ist durch:
1.2.5. Definieren der Graphik-Daten der Graphik-Elemente der Seitenspezifikation.

11. Das Verfahren gemäß einem beliebigen der Ansprüche 1 bis 10, bei dem der Schritt 1.3.3. durch folgenden Schritt charakterisiert ist:
Skalieren der Größe eines der Text-Elemente und der Graphik-Elemente gemäß der Mehrzahl von Beschränkungen der ausgewählten Seitenspezifikation.

12. Das Verfahren gemäß einem beliebigen der Ansprüche 1 bis 11, bei dem der Schritt 1.3.3. durch folgenden Schritt charakterisiert ist:
Ändern des Abstands zwischen einigen der Text-Elemente und der Graphik-Elemente gemäß der Mehrzahl der Beschränkungen der ausgewählten Seitenspezifikation.

13. Das Verfahren gemäß einem beliebigen der Ansprüche 1 bis 12, bei dem der Schritt 1.3.3. durch folgenden Schritt charakterisiert ist:
Ändern der Zeilenumbrüche in den Zeichenfolgen eines der Text-Elemente, das in dem Schritt des Definierens definiert wird.

14. Das Verfahren gemäß einem beliebigen der Ansprüche 1 bis 13, bei dem der Schritt 1.3.3. durch folgenden Schritt charakterisiert ist:
Dehnen der Zeichenfolgen zumindest eines Text-Elements, das in dem Schritt des Definierens definiert wird, durch Ändern der Längen der Zeichenfolgen in eine einzelne Richtung.

15. Das Verfahren gemäß einem beliebigen der Ansprüche 1 bis 14, bei dem der Schritt des Anzeigens charakterisiert ist durch:
Anzeigen des Seitenlayouts des Schritts 1.3. elektronisch auf einer Anzeigevorrichtung.

16. Das Verfahren gemäß einem beliebigen der Ansprüche 1 bis 15, bei dem der Schritt des Anzeigens charakterisiert ist durch:
Drucken des Seitenlayouts des Schritts 1.3. auf einem Drucker.

17. Das Verfahren gemäß einem beliebigen der Ansprüche 1 bis 16, bei dem der Schritt 1.3.3. durch folgenden Schritt charakterisiert ist:
Manipulieren der Text-Elemente und Graphik-Elemente derart, daß zumindest eine der Mehrzahl der Beschränkungen exakt eingehalten wird.

18. Das Verfahren gemäß einem beliebigen der Ansprüche 1 bis 17, bei dem die Mehrzahl der Beschränkungen eine hierarchische Anordnung aufweist, in der einige der Beschränkungen eine höhere Priorität als andere der Beschränkungen aufweisen, und bei der die Beschränkungen höherer Priorität im Schritt 1.3. erfüllt werden.

19. Das Verfahren gemäß einem beliebigen der Ansprüche 1 bis 18, bei dem die Mehrzahl der Beschränkungen gekennzeichnet ist durch:
zumindest eine Beschränkung, die einige der Text-Elemente und Graphik-Elemente in eine hierarchische Struktur anordnet, die als eine einzelne Einheit manipuliert werden.

20. Eine Vorrichtung zum automatischen Erzeugen eines Layouts einer Mehrzahl von Text-Elementen (T1 - T6) und Graphik-Elementen (G1) auf einer Seite, die folgende Merkmale aufweist:
eine Speichereinrichtung (25) zum Speichern einer Mehrzahl von Seitenspezifikationen, wobei jede Seitenspezifikation (22) eine Mehrzahl von Beschränkungen aufweist, die das Layout der Benutzer-definierbaren Text-Elemente und Graphik-Elemente auf einem Ausgabemedium beschreiben;
eine Einrichtung (12, 14, 26), die mit der Speichereinrichtung gekoppelt ist, zum Auswählen einer der Seitenspezifikationen;
eine Einrichtung (12, 15, 18) zum Empfangen und Speichern Benutzer-definierter Zeichenfolgen, die die Text-Elemente und Benutzer-definierten Graphik-Daten, die die Graphik-Elemente definieren, definieren;
eine Einrichtung (12, 15, 26), die auf die Speichereinrichtung und die Empfangseinrichtung anspricht und wirksam ist, um die Text-Elemente und Graphik-Elemente in einem Seitenlayout anzuordnen;
dadurch gekennzeichnet,
daß die Beschränkungen mit einer Priorität versehen und gewichtet sind; und
daß die Anordnungseinrichtung (12, 15, 26) die Text-Elemente und die Graphik-Elemente gemäß der Prioritätsversehung und Gewichtung der ausgewählten einen Seitenspezifikation auf der Seite anordnet, überprüft, ob die angeordneten Text-Elemente und Graphik-Elemente die erfüllte Seitenspezifikation erfüllen und das Layout der angeordneten Elemente neu definiert, wenn die angeordneten Elemente die Seitenspezifikation nicht erfüllen; und
daß die Anzeigeeinrichtung (16) das erzeugte Seitenlayout anzeigt, wenn die angeordneten Elemente die ausgewählte Seitenspezifikation erfüllen.

21. Die Vorrichtung gemäß Anspruch 20, bei der die Einrichtung zum Anzeigen eine Videoanzeigevorrichtung aufweist.

22. Die Vorrichtung gemäß Anspruch 20 oder 21, bei der die Einrichtung zum Anzeigen einen Drucker aufweist.

23. Die Vorrichtung gemäß einem beliebigen der Ansprüche 20 bis 22, bei der die Mehrzahl von Beschränkungen gekennzeichnet ist durch:
zumindest eine Beschränkung auf die Größe eines der Mehrzahl von Elementen relativ zu den anderen der Mehrzahl von Elementen und der Seite.

24. Die Vorrichtung gemäß einem beliebigen der Ansprüche 20 bis 23, bei der die Mehrzahl von Beschränkungen gekennzeichnet ist durch:
zumindest eine Beschränkung auf die Plazierung eines der Mehrzahl der Elemente relativ zu den anderen der Mehrzahl der Elemente und der Seite.

25. Die Vorrichtung gemäß einem beliebigen der Ansprüche 20 bis 24, bei der die Mehrzahl von Beschränkungen gekennzeichnet ist durch:
zumindest eine Skalierungsbeschränkung, die fordert, daß eines der Mehrzahl der Elemente einen bezeichneten Bereich der Seite ausfüllt oder in denselben paßt.

26. Die Vorrichtung gemäß einem beliebigen der Ansprüche 20 bis 25, bei der die Mehrzahl von Beschränkungen gekennzeichnet ist durch:
eine Beschränkung auf das Seitenverhältnis der Seite.

27. Die Vorrichtung gemäß einem beliebigen der Ansprüche 20 bis 26, bei der die Einrichtung zum Manipulieren gekennzeichnet ist durch:
eine Einrichtung zum Skalieren der Größe eines der Text-Elemente gemäß einer der Beschränkungen der einen Seitenspezifikation.

28. Die Vorrichtung gemäß einem beliebigen der Ansprüche 20 bis 27, bei der die Einrichtung zum Manipulieren gekennzeichnet ist durch:
eine Einrichtung zum Ändern des Abstands zwischen den Text-Elementen und Graphik-Elementen gemäß einer der Beschränkungen der einen Seitenspezifikation.

29. Die Vorrichtung gemäß einem beliebigen der Ansprüche 20 bis 28, bei der die Einrichtung zum Manipulieren gekennzeichnet ist durch:
eine Einrichtung zum Ändern der Zeilenumbrüche in den Benutzer-definierten Zeichenfolgen eines Text-Elements der einen Seitenspezifikation.

30. Die Vorrichtung gemäß einem beliebigen der Ansprüche 20 bis 29, bei der die Einrichtung zum Manipulieren gekennzeichnet ist durch:
eine Einrichtung zum Dehnen einer Benutzer-definierten Zeichenfolge eines Text-Elements durch das Ändern der Länge der Zeichenfolge in eine einzelne Richtung.

31. Die Vorrichtung gemäß einem beliebigen der Ansprüche 20 bis 30, bei der die Einrichtung zum Speichern eine ROM-Speichervorrichtung ist.

32. Die Vorrichtung gemäß einem beliebigen der Ansprüche 20 bis 31, bei der die Einrichtung zum Manipulieren gekennzeichnet ist durch:
eine Einrichtung zum Skalieren der Größe eines der Graphik-Elemente gemäß einer der Beschränkungen der einen Seitenspezifikation.

## Revendications

1. Procédé pour la disposition automatisée sur une page d'éléments de texte et d'éléments de graphique, comprenant les étapes suivantes consistant à:
1.1. sélectionner l'une parmi une pluralité de spécifications de page dans un dispositif de mémoire, chaque spécification de page comprenant une pluralité de contraintes décrivant la disposition sur une page d'éléments de texte et d'éléments de graphique définissables par l'utilisateur,
1.2. définir (44) lesdits éléments de texte et lesdits éléments de graphique, et
1.3. disposer (46, 48) lesdits éléments de texte et éléments de graphique définis en une page, selon lesdites contraintes,
caractérisé en ce
qu'il est attribué une priorité auxdites contraintes et qu'elles sont pondérées, et
que lesdits éléments de texte et éléments de graphique définis sont disposés en une mise en page en réalisant automatiquement les étapes suivantes consistant à:
1.3.1. disposer lesdits éléments de texte et éléments de graphique sur la page selon l'attribution de priorités et la pondération de ladite pluralité de contraintes de ladite une spécification de page sélectionnée,
1.3.2. vérifier si les éléments de texte et éléments de graphique disposés répondent à la spécification de page sélectionnée, et
1.3.3. si les éléments disposés ne satisfont pas à ladite spécification de page sélectionnée, redéfinir la disposition des éléments disposés,
1.4. si les éléments disposés répondent à ladite spécification de page sélectionnée, afficher la mise en page (50).

2. Procédé suivant la revendication 1, dans lequel l'étape 1.1 est caractérisée, par ailleurs, par les étapes supplémentaires consistant à:
1.1.1. définir ladite pluralité de contraintes, et
1.1.2. mémoriser ladite pluralité de contraintes dans un dispositif de mémoire.

3. Procédé suivant la revendication 1 ou 2, dans lequel ladite pluralité de contraintes est caractérisée par une contrainte relative à la grandeur de l'un de la pluralité d'éléments par rapport à d'autres de ladite pluralité d'éléments et à la page.

4. Procédé suivant l'une ou l'autre des revendications 1 à 3, dans lequel ladite pluralité de contraintes est caractérisée par une contrainte relative à l'emplacement de l'un de la pluralité d'éléments par rapport à d'autres de ladite pluralité d'éléments et à la page.

5. Procédé suivant l'une ou l'autre des revendications 1 à 4, dans lequel ladite pluralité de contraintes est caractérisée par au moins une contrainte d'adaptation à l'échelle imposant que l'un de la pluralité d'éléments remplisse ou rentre dans une zone désignée de la page.

6. Procédé suivant l'une ou l'autre des revendications 1 à 5, dans lequel ladite pluralité de contraintes est caractérisée par une contrainte relative au rapport d'aspect de la page.

7. Procédé suivant l'une ou l'autre des revendications 1 à 6, dans lequel l'étape de définition est caractérisée par les étapes supplémentaires consistant à:
1.2.1. définir la grandeur de la page, et
1.2.2 définir le rapport d'aspect de la page.

8. Procédé suivant l'une ou l'autre des revendications 1 à 7, dans lequel l'étape de définition est caractérisée, par ailleurs, par l'étape consistant à:
1.2.3. sélectionner un type de lettre pour l'un des éléments de texte de la spécification de page.

9. Procédé suivant l'une ou l'autre des revendications 1 à 8, dans lequel l'étape de définition est caractérisée par:
1.2.4. la définition des jeux de caractères des éléments de texte de la spécification de page.

10. Procédé suivant l'une ou l'autre des revendications 1 à 9, dans lequel l'étape de définition est caractérisée par:
1.2.5. la définition des données graphiques des éléments de graphique de la spécification de page.

11. Procédé suivant l'une ou l'autre des revendications 1 à 10, dans lequel l'étape 1.3.3 est caractérisée par l'étape consistant à adapter à l'échelle la grandeur de l'un des éléments de texte et des éléments de graphique selon ladite pluralité de contraintes de ladite spécification de page sélectionnée.

12. Procédé suivant l'une ou l'autre des revendications 1 à 11, dans lequel l'étape 1.3.3 est caractérisée par l'étape consistant à modifier l'espacement entre certains des éléments de texte et des éléments de graphique selon ladite pluralité de contraintes de ladite spécification de page sélectionnée.

13. Procédé suivant l'une ou l'autre des revendications 1 à 12, dans lequel l'étape 1.3.3 est caractérisée par l'étape consistant à modifier les fins de ligne dans les jeux de caractères de l'un des éléments de texte définis à l'étape de définition.

14. Procédé suivant l'une ou l'autre des revendications 1 à 13, dans lequel l'étape 1.3.3 est caractérisée par l'étape consistant à étendre le jeu de caractères d'au moins un élément de texte défini à l'étape de définition en modifiant les longueurs des jeux de caractères dans une seule direction.

15. Procédé suivant l'une ou l'autre des revendications 1 à 14, dans lequel l'étape d'affichage est caractérisée par l'affichage électronique de la mise en page de l'étape 1.3 sur un dispositif d'affichage.

16. Procédé suivant l'une ou l'autre des revendications 1 à 15, dans lequel l'étape d'affichage est caractérisée par l'impression de la mise en page de l'étape 1.3 sur une imprimante.

17. Procédé suivant l'une ou l'autre des revendications 1 à 16, dans lequel l'étape 1.3.3 est caractérisée par l'étape consistant à manipuler lesdits éléments de texte et éléments de graphique de manière qu'au moins l'une de ladite pluralité de contraintes soit exactement remplie.

18. Procédé suivant l'une ou l'autre des revendications 1 à 17, dans lequel ladite pluralité de contraintes ont une disposition hiérarchique dans laquelle certaines desdites contraintes ont une priorité supérieure à d'autres desdites contraintes et dans lequel les contraintes à priorité supérieure sont satisfaites à l'étape 1.3.

19. Procédé suivant l'une ou l'autre des revendications 1 à 18, dans lequel ladite pluralité de contraintes est caractérisée par au moins une contrainte qui dispose certaines desdits éléments de texte et éléments de graphique en une structure hiérarchique qui est manipulée comme un ensemble unique.

20. Appareil pour la génération automatique d'une disposition sur une page d'une pluralité d'éléments de texte (T1 à T6) et d'éléments de graphique (G1), comprenant:
un moyen de mémoire (25) destiné à mémoriser une pluralité de spécifications de page, chaque spécification de page (22) comprenant une pluralité de contraintes décrivant la disposition sur un milieu de sortie des éléments de texte et éléments de graphique définissables par l'utilisateur,
des moyens (12, 14, 26), couplés audit moyen de mémoire, destinés à sélectionner l'une desdites spécifications de page,
des moyens (12, 15, 18) destinés à recevoir et mémoriser des jeux de caractères, définis par l'utilisateur, définissant lesdits éléments de texte et des données graphiques, définis par l'utilisateur, définissant lesdits éléments de graphique,
des moyens (12, 15, 26), réagissant audit moyen de mémoire et audit moyen de réception, pouvant être commandés pour disposer lesdits éléments de texte et éléments de graphique en une mise en page, et
un moyen (16) destiné à afficher la mise en page générée,
caractérisé en ce
qu'il est attribué une priorité auxdites contraintes et qu'elles sont pondérées, et
que lesdits moyens de disposition (12, 15, 26) disposent sur la page lesdits éléments de texte et lesdits éléments de graphique selon l'attribution de priorités et la pondération de ladite une spécification de page sélectionnée, vérifient si les éléments de texte et éléments de graphique disposés répondent à la spécification de page sélectionnée, et redéfinissent la disposition des éléments disposés, si les éléments disposés ne répondent pas à la spécification de page, et
que ledit moyen d'affichage (16) affiche la mise en page générée si les éléments disposés répondent à ladite une spécification de page sélectionnée.

21. Appareil suivant la revendication 20, dans lequel ledit moyen d'affichage comporte un dispositif d'affichage d'image.

22. Appareil suivant la revendication 20 ou 21, dans lequel ledit moyen d'affichage comporte une imprimante.

23. Appareil suivant l'une ou l'autre des revendications 20 à 22, dans lequel ladite pluralité de contraintes est caractérisée par au moins une contrainte relative à la grandeur de l'un de la pluralité d'éléments par rapport à d'autres de ladite pluralité d'éléments et à la page.

24. Appareil suivant l'une ou l'autre des revendications 20 à 23, dans lequel ladite pluralité de contraintes est caractérisée par au moins une contrainte relative à l'emplacement de l'un de la pluralité d'éléments par rapport à d'autres de ladite pluralité d'éléments et à la page.

25. Appareil suivant l'une ou l'autre des revendications 20 à 24, dans lequel ladite pluralité de contraintes est caractérisée par au moins une contrainte d'adaptation à l'échelle imposant que l'un de la pluralité d'éléments remplisse ou rentre dans une zone désignée de la page.

26. Appareil suivant l'une ou l'autre des revendications 20 à 25, dans lequel ladite pluralité de contraintes est caractérisée par une contrainte relative au rapport d'aspect de la page.

27. Appareil suivant l'une ou l'autre des revendications 20 à 26, dans lequel ledit moyen de manipulation est caractérisé par un moyen pour adapter à l'échelle la grandeur de l'un des éléments de texte selon l'une desdites contraintes de ladite une spécification de page.

28. Appareil suivant l'une ou l'autre des revendications 20 à 27, dans lequel ledit moyen de manipulation est caractérisé par un moyen pour modifier l'espacement entre les éléments de texte et les éléments de graphique selon l'une desdites contraintes de ladite une spécification de page.

29. Appareil suivant l'une ou l'autre des revendications 20 à 28, dans lequel ledit moyen de manipulation est caractérisé par un moyen pour modifier les fins de ligne dans les jeux de caractères définis par l'utilisateur d'un élément de texte de ladite une spécification de page.

30. Appareil suivant l'une ou l'autre des revendications 20 à 29, dans lequel ledit moyen de manipulation est caractérisé par un moyen pour étendre un jeu de caractères défini par l'utilisateur d'un élément de texte en modifiant la longueur du jeu de caractères dans une seule direction.

31. Appareil suivant l'une ou l'autre des revendications 20 à 30, dans lequel ledit moyen de mémorisation est un dispositif de mémoire ROM.

32. Appareil suivant l'une ou l'autre des revendications 20 à 31, dans lequel ledit moyen de manipulation est caractérisé par un moyen pour adapter à l'échelle la grandeur de l'un des éléments de graphique selon l'une desdites contraintes de ladite une spécification de page.
